Europäisches Patentamt

European Patent Office

Office européen des brevets

(19)

(11) Publication number: **0 209 918 B1**

## EUROPEAN PATENT SPECIFICATION

(12)

(45) Date of publication of patent specification: **21.08.91**  (51) Int. Cl.⁵: **B28D 7/04**, B28D 1/02

(21) Application number: **86200253.2**

(22) Date of filing: **19.02.86**

(54) Device for sawing plate material.

(30) Priority: **24.07.85 BE 2060752**

(43) Date of publication of application:
**28.01.87 Bulletin 87/05**

(45) Publication of the grant of the patent:
**21.08.91 Bulletin 91/34**

(84) Designated Contracting States:
**AT CH DE FR GB IT LI LU NL SE**

(56) References cited:
**EP-A- 0 019 419**    **BE-A- 891 834**
**CA-A- 995 918**    **DE-A- 1 752 957**
**FR-A- 2 350 938**    **US-A- 4 076 228**

(73) Proprietor: **Van Voorden, Hendrik**
**Muiderkring 2**
**NL-4873 GV Etten-Leur(NL)**

(72) Inventor: **Van Voorden, Hendrik**
**Muiderkring 2**
**NL-4873 GV Etten-Leur(NL)**

(74) Representative: **Donné, Eddy**
**M.F.J.Bockstael Arenbergstraat 13**
**B-2000 Anvers(BE)**

Rank Xerox (UK) Business Services

## Description

The present inventions refers to a sawing device for plate material comprising a carrier for at least one plate of plate material, means mounted on the carrier for holding at least one plate of plate material to be sawn, said means comprising at least one sucker and at least one circular saw for sawing the plate over about half of its height and its entire length, the carrier and the saw being movable with respect to each other in the sawing direction, this is parallel to the plane of the circular saw-blade. Such sawing devices are used for sawing more particularly plate material of the type comprising a natural product, like marble, and provided with a reinforced layer, e.g. in the form of honeycomb material, such plate material being generally manufactured by starting from a relatively large thickness of natural material, provided on either side with a said reinforcing layer and enabling, by sawing through the natural material, to obtain a finished product of relatively great stiffness but comprising a very small thickness of natural product.

With sawing devices of the above mentioned kind it is known to saw through the plate material a first time over the entire length and half its height, subsequently turning it over 180 degrees and to effect a second saw-cut in order to saw through the plate material completely.

Such devices have the advantage that a smaller and consequently thinner saw blade may be used than when the plate material is sawn in one time over its entire height and entire length. A thinner blade means a smaller saw-cut and less waste of material.

Such a device is known from EP-A-0 019 419. In this known device the plates are hold in a fixed position on the carrier end the first half of the height of the plate is sawn. This know device comprises an additional carrier whereon the half-sawn plate is then placed, titled over 180 degrees around an axis parallel to the sawing direction and replaced on the first carrier for sawing the second half of the height. Due to the two carriers, a sawing carrier and a tilting carrier, said known device is expensive and needs much place. Also the alternate placing of the plate to be sawn from one carrier by suckers on both sides what does not permit a very precise positioning so that a transition between both saw cuts may occur.

The aim of the present invention is to avoid the above mentioned drawbacks and to provide for a sawing device of the above mentioned kind which avoids transitions between the saw-cuts and thus any additional machining of the saw-cuts, which is very compact and which permits a higher production, respectively better efficiency by saving time in installing and turning over of the plate material.

For this purpose, the sawing device comprises at least one support mounted on the carrier, a shaft supported in said support and extending in the traverse direction with respect to said sawing direction, a turntable plate on at least one of the free ends of said shaft, locking means for said turntable plate and insertion means for insertion in the first half cut already sawn and for holding open, during sawing of the second half cut, said first half cut, the means for holding the material plate comprising besides at least one sucker which is mounted on the outside of a turntable plate, pressing on means for pressing a material plate against the sucker.

A device for working the edges of a stone wherein said stone is turned with respect to the carrier is known from DE-A-1 752 957. This device is however not a sawing device and does not comprise any saw movable with respect to the carrier. It is intended for the manual working of moreover relatively thick stones. The stones are clamped by pressing on means on both sides in a ring rotatably mounted on the carrier. Sawing the stone over its complete height end length in two times is not possible with this device.

In a particular form of embodiment of the invention, the sawing device comprises two turntable plates on free ends of at least one shaft, which shaft extends in the traverse direction with respect to the sawing direction, and for each turntable plate locking means and inserting means, means for holding a material plate in place on each turntable plate, said means comprising at least one sucker on the outside of the turntable plate and pressing-on means for pressing a material plate against the sucker.

Especially this form of embodiment is advantageous.

If in the device disclosed in EP-A-0 019 419 simultaneously two saws are used, installed at a well-determined distance from each other, and simultaneously sawing through two plates, what is necessary to ensure the efficiency of such a device, the two half saw-cuts in one and the same plate being made with two different saws, that results in transitions in the saw cuts of both plate halves due to uneven wear of the saw-blades.

This requires not only subsequent milling off these transitions on another machine, entraining additional machining and expenses, but in such a device the transitions between the two saw-cuts will rather soon become so large than both of the saw-blades must be renewed even if they are not yet completely worn.

In order to better evidence the features of the invention, a preferred embodiment is described below by way of example without restrictive nature, referring to the attached drawings in which :

Fig. 1 shows a top-view of a device according to the invention;

fig.2 shows a side-view of figure 1;

fig. 3 shows a front-view of figure 1;

fig. 4 gives a perpective view of the part indicated by F4 in fig. 1;

fig. 5 gives a schematic side-view of the circular saw according to the invention operating in conjunction with water injectors;

fig. 6 shows a schematic section, drawn to an enlarged scale, as per line VI-VI in figure 5;

figures 7 and 11 represent top-views of a variant of figure 1;

figures 8 and 12 represent a side-view of figures 7 and 11 respectively;

figures 9 and 13 represent a front-view of figures 7 and 11 respectively;

figure 10 represents a perpective view according to arrow F10 in figures 8 and 12;

figure 13 represents a perpective view of the part indicated in the figures 8 and 11 by F3;

figure 14 represents a variant of figure 4.

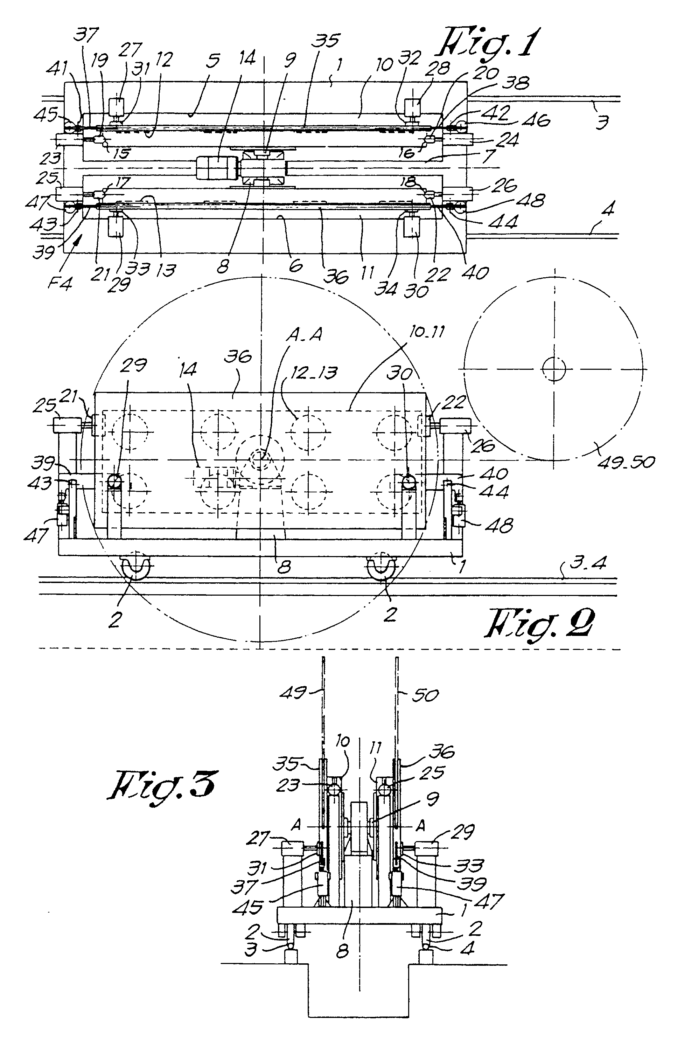

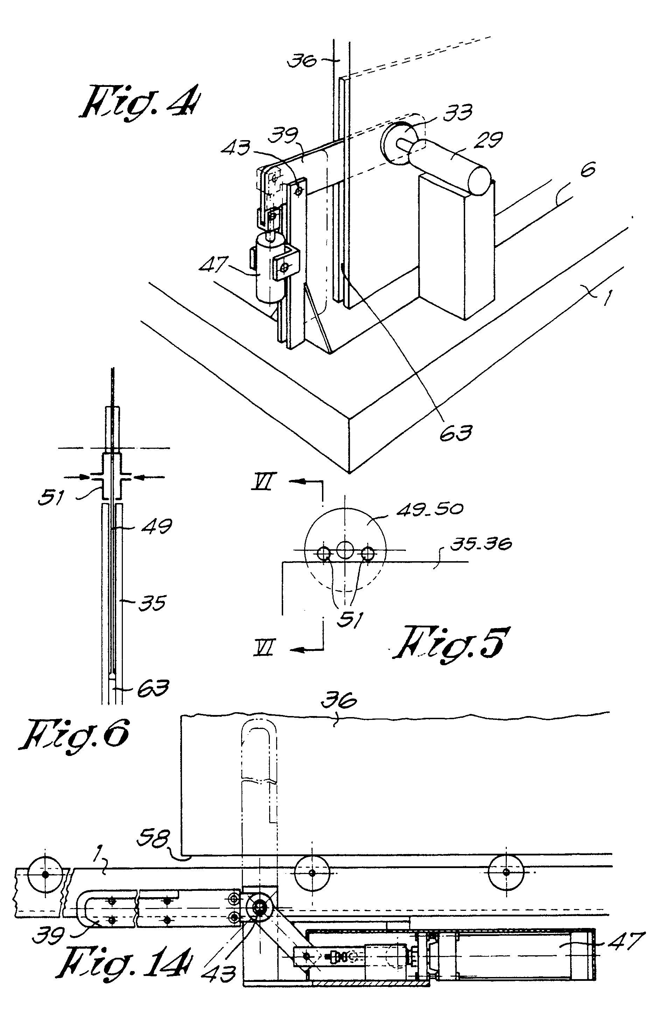

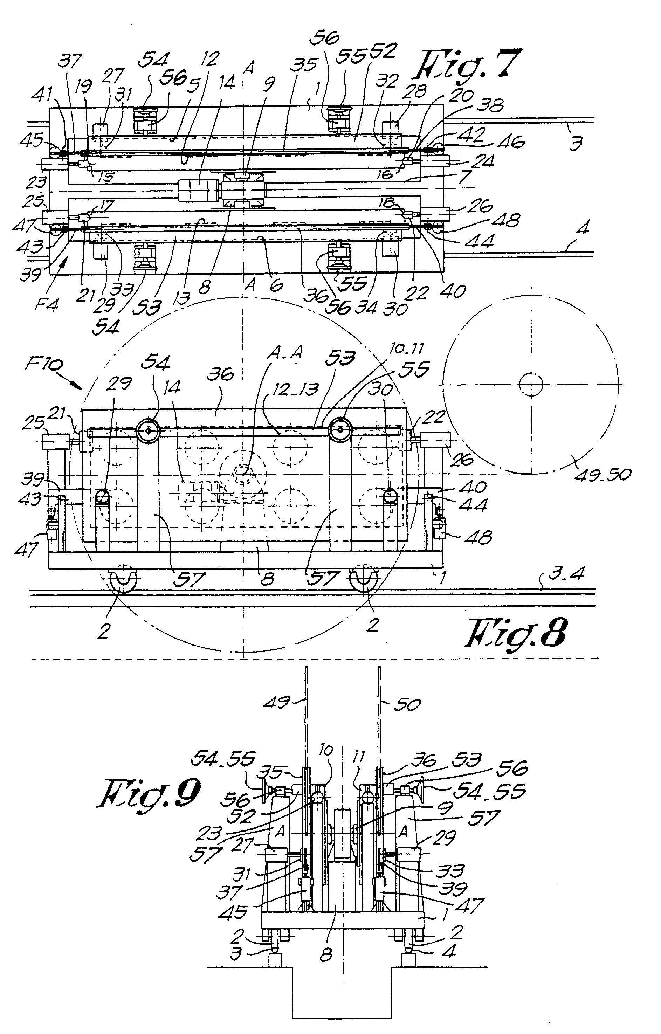

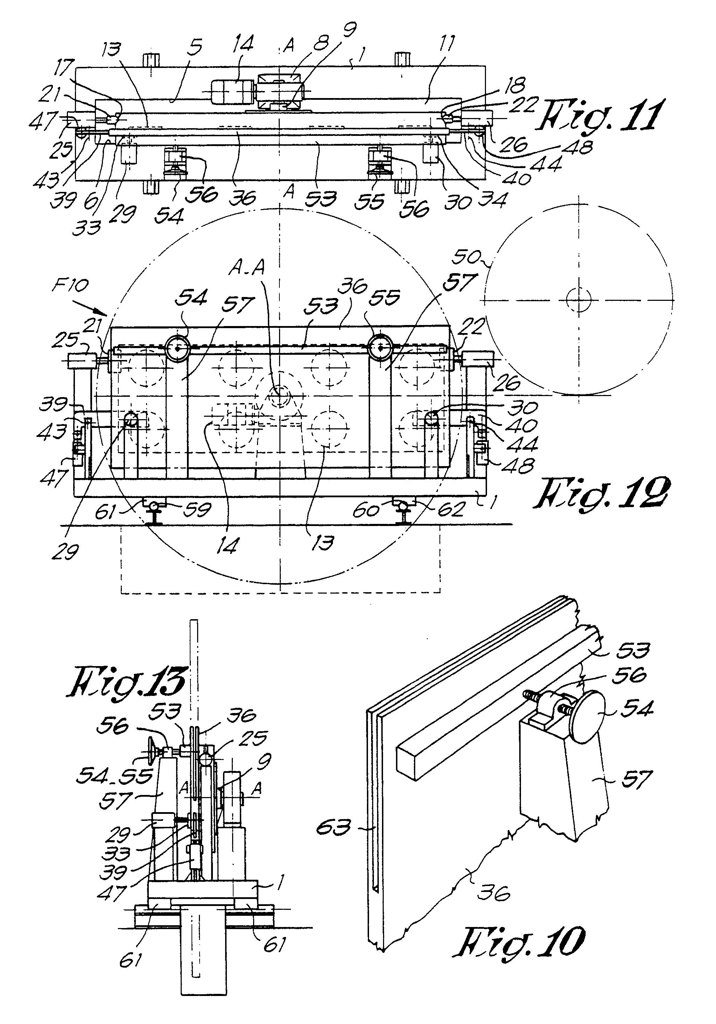

The sawing device as shown in figures 1 through 6 mainly consists of a carrier 1 which can travel on rails by means of travelling wheels 2, carrier 1 being mainly composed of a flat rectangular frame comprising two recesses 5 and 6 respectively.

On the central part 7 of carrier 1 a support 8 is provided, in which a shaft 9 is mounted to rotate around axis A-A, each end of said shaft 9 carrying a plate 10 and 11 respectively, suitably equipped with one or several suckers 12 and 13 respectively, gears not shown on the drawing being mounted with said shaft 9, which can operate in conjunction with the gear fitted on a common drive motor 14, the purpose of which is to tilt plates 10-11 around axis A-A at the proper moment.

Each of the vertical small sides of said plates 10 and 11 is provided with, in this case, a triangular groove 15-16 and 17-18 respectively, with which can co-operate pins with triangular ends 19-20-21 and 22 respectively. These pins 19 through 22 are fitted to the free ends of the piston rods of pressure cylinders 23-24-25 and 26 respectively, adequately attached to the frame of carrier 1.

On the outside of carrier 1, suitable pressure cylinders 27-28-29 and 30 are mounted, whose piston rods are equipped with pressing-on pieces 31-32-33 and 34 respectively, the purpose of which lies in the fact that the plate material elements to be sawn 35 and 36 respectively, held in place by suckers 12 and 13 against plates 10 and 11, are additionally sustained by these pressing-on elements 31 through 34.

Opposite the vertical lateral edges of each element 35-36, insertion pieces are provided 37-38-39 and 40 respectively, which, as shown in figure 4, are L-shaped and can rotate freely in relation to suitable supports by means of shafts 41-42-43 and 44 respectively, whereas the piston rod of a pressure cylinder 45-46-47 and 48 respectively can operate in conjunction with the free end of these L-shaped insertion pieces.

The plate material 35-36 can be adequately machined by saws 49 and 50 respectively, suspended and driven in any suitable manner.

As schematically shown in figures 5 and 6, water injectors 51, whose purpose is explained below, are provided at either side of a saw 49 and 50 respectively.

In figures 7 through 9 an embodiment is represented being identical to that of the figures 1 through 3, but wherein the outer side of each plate material 35-36 is provided with a support beam 52-53 respectively, which is suitably pressed against the material 35-36 by means of, e.g., threaded rods 54-55, each of which co-operates with a nut 56 fixed to a support 57.

Figures 11 through 13 indeed show an embodiment in which frame 1 is stationary, in this case only one plate 35 being sawn and saw 49 being moved.

In fact this device is comparable to half a device according to figures 1 through 6 so that it need not be described again.

It is clear that also with a carrier 1 according to the figures 1 through 3 or 7 through 9 only one plate can be sawn, but that a carrier 1 can be used according to the figures 11 through 13 for sawing two plates as well.

In this case, however, frame 1 is movable indeed at right angles in relation to guides 59-60, with which can co-operate slides 61-62 installed under the frame. This additional possibility allows to accurately adjust the position of plate 35 in relation to saw 49.

Finally, in figure 14 a variant of figure 4 is represented, wherein the insertion piece 39 is placed in swung-aside position under the lower end 58 of the plate material 35-36 in order to not hinder the lateral in-feed of plate material to the carrier 1.

The operation of the device is very simple.

Before the sawing activities are started, a layer of plate material 35-36 is fixed against each of the plates 10-11 by means of suckers 12-13, whereby the plates 10-11 and thus the plate material 35-36 are held in the adequate position by keeping said plates 10-11 immobile with respect to the frame or carrier 1 by means of the locking elements 19 through 22.

Plate material 35-36 is additionally pressed against plates 10-11 by means of the pressing-on elements 31 through 34.

At this moment carrier 1 is displaced at an appropriate speed along rails 3-4 resulting in plate material 35-36 being machined by saws 49 and 50 which are installed in such a way that plate material 35-36 is sawn through over half its height and its entire length.

After the above-mentioned saw-cut is completed, carrier 1 returns to its initial position, then pressing-on means 31 through 34 as well as locking means or pins 19 through 22 are withdrawn and next, by means of motor 14, rotate plates 10 and 11 together with plate material 35-36 by 180° around axis A-A through recesses 5 and 6, after which locking means 19 through 22 will first be extended again to hold the plate material in the proper position after which, by means of pressure cylinders 45 through 48, insertion pieces 37 through 40 are slid into the already available saw-cuts 52, as appears in detail from figure 4, and afterwards pressing-on means 31 through 34 are again caused to act on plate material 35-36.

This ensures that in the area of pressing-on means 31 through 34 the saw-cut 63 is engaged by insertion pieces 37 through 40, providing an adequate fastening of the plate material, which is especially useful when this material is completely sawn through in the next operating step.

At this moment it is sufficient to disperse carrier 1 again in relation to saws 49 and 50 for a second saw-cut to be made, which corresponds smoothly with the first saw-cut 63, resulting in plate material 35-36 being sawn through over the entire length and the entire height, the outer element being held in place by pressing-on means 31 and 34.

Especially during machining of the second half saw-cut, in order to keep the latter adequately open, as shown in figures 5 and 6, one or several, in this case two, water injectors 51 are provided at either side of each of the saw-blades 49 and 50 to spray water under a determined pressure on said saw-blades, this water being entrained into the saw-cut during sawing, thus creating a thin film under pressure between saw and saw cut, securing an adequate distance between saw-cut and saw.

It is obvious that this provides a device completely avoiding any transition between both saw-cut halves, because one and the same saw-cut is always made by the same saw, so that no equalizing operation is required; tool costs being therefore noticeably lower, because the saws can be completely used; efficiency of the device being relatively high because little time is lost in turning over the plate material to be sawn and the complete device requiring little installation space, because both sawing and turning over of the plate material to be sawn can be effected in a small room space and on only one carrier.

It is obvious that the present invention is in no way restricted to the embodiment described as an example and shown in the attached drawings, but such device can be built in any shape and dimensions without exceeding the scope of the invention, which is determined by the terms of the claims.

## Claims

1. Sawing device for plate material comprising a carrier (1) for at least one plate of plate material (35, 36) means (12, 13) and (31, 32, 33, 34) mounted on the carrier (1) for holding at least one plate of the plate material (35, 36) to be sawn said means comprising at least one sucker (12, 13) and at least one circular saw (49, 50) for sawing the plate (35, 36) over about half its height and its entire length, the carrier (1) and the saw (49, 50) being movable with respect to each other in the sawing direction, this is parallel to the plane of the circular saw-blade (49, 50), characterised in that it comprises at least one support (8) mounted on the carrier (1), a shaft (9) supported in said support (8) and extending in the traverse direction with respect to said sawing direction, a turntable plate (10, 11) on at least one of the free ends of said shaft (9) rotatable around the geometrical axis of said shaft (9), locking means (19, 20, 21, 22) for said turntable plate (10, 11) and insertion means (37, 38, 39, 40) for insertion in the first half cut already sawn and for holding open, during sawing of the second half-cut, said first half-cut, the means (12, 13 and 31, 34) holding the material plate (35, 36) comprising, besides at least one sucker (12, 13) which is mounted on the outside of a turntable plate, (10, 11), pressing-on means (31, 32, 33, 34) for pressing a material plate (35, 36) against the sucker (12, 13).

2. Sawing device according to the preceding claim characterised in that it comprises two turntable plates (10 and 11) on free ends of at least one shaft (9), which shaft extends in the traverse direction with respect to the sawing direction, and for each turntable plate (10 or 11) locking means (19, 20, 21, 22) and insertion means (37, 38, 39, 40), means (12, 13, and 31, 34) for holding a material plate (35, 36) in place on each turntable plate (10, 11) said holding means comprising at least one sucker (12, 13) on the outside of the turntable plate (10, 11) and pressing-on means (31, 32, 33, 34) for pressing a material plate (35, 36) against the sucker (12, 13).

3. Sawing device according to the preceding claim, characterised in that said turntable plates (10 and 11) are mounted on both free ends of a common shaft (9).

4. Sawing device according to any one of the preceding claims, characterised in that it comprises a motor (14) and a transmission between said motor and the shaft (9) on which the turntable plate (10, 11) is fixed.

5. Sawing device according to claim 1, characterised in that said carrier (1) comprises a horizontal flat rectangular frame comprising, per plate (35, 36) to be sawn, a passage (5,6) enabling tilting the plates (35, 36).

6. Sawing device according to any one of the preceding claims, characterised in that said carrier (1) is equipped with slides (61-62) or travelling wheels (2) for moving during sawing in a plane parallel to the plane of the saw-blade (49-50).

7. Sawing device according to any one of the preceding claims, characterised in that the pressing-on means to hold the plate material (35-36) comprise pressure cylinder mechanisms (27, 28, 29, 30) and pressing-on discs (31, 32, 33, 34) fitted on the free end (23, 24, 25, 26) of the piston rod of said pressure cylinder mechanism (27, 28, 29, 30).

8. Sawing decive according to any one of the preceding claims characterised in that one of afore-mentioned pressing-on means (31, 32, 33, 34) is provided at either end of the plate of plate material (35, 36) at a height slightly lower than half the height of said plate.

9. Sawing device according to any one of claims 7 and 8 characterised in that the above mentioned locking means (19, 20, 21, 22) comprise recesses (5, 6) or grooves (15, 16 and 17, 18) in the vertical sides of the afore-mentioned turntable plate. (10, 11) and pins (19, 20, 21, 22) fitted on the free end (23, 24, 25, 26) of a pressure cylinder (27, 28, 29, 30) co-operating with said recesses (5,6) or grooves (15, 16 and 17, 18).

10. Sawing device according to the preceding claim, characterised in that the above mentioned grooves (15, 16 and 17, 18) are made vertically in the corresponding vertical edges of said turntable plate (10-11), the horizontal section of said grooves (15, 16, 17, 18) being triangular in shape to match the triangular end of an afore-mentioned pin (19, 20, 21, 22).

11. Sawing device according to any one of preceding claims, characterised in that the above mentioned insertion means (37, 38, 39, 40) comprise insertion pieces whose thickness is equal to or slightly smaller than the width of the saw-cut, said insertion pieces (37, 38, 39, 40) being hinged relative to the carrier (1) and being adequately movable in or out of the saw-cut by means of a pressure cylinder mechanism (45, 46, 47, 48).

12. Sawing device according to any one of the preceding claims, characterised in that each of the saw-blades (49-50) for sawing through half the height of said plate material (35-36) is equipped at either side of at least one water injector (51) ensuring that an adequate distance is maintained between the saw and the adjacent saw-cut surface, all in such a way that the saw-cut is kept continuously open during sawing.

**Revendications**

1. Dispositif de sciage destiné à une matière en plaques, comprenant un chariot (1) destiné à au moins une plaque de matière (35, 36) de ce type, des moyens (12, 13) et (31, 32, 33, 34) montés sur le chariot (1) destinés à maintenir au moins une plaque de matière (35, 36) de ce type devant être sciée, ces moyens comprenant au moins une ventouse (12, 13) et au moins une scie circulaire (49, 50) destinée à scier la plaque (35, 36) sur environ la moitié de sa hauteur et sur toute sa longueur, le chariot (1) et la scie (49, 50) étant mobiles l'un par rapport à l'autre dans la direction de sciage, à savoir une direction parallèle au plan de la lame de la scie circulaire (49, 50), **caractérisé en ce qu'**il comprend au moins un support (8) monté sur le chariot (1), un arbre (9) supporté au sein du support (8) et s'étendant en direction transversale par rapport à la direction de sciage, une plaque de table tournante (10, 11) sur au moins une des extrémités libres de l'arbre (9), apte à effectuer des rotations autour de l'axe géométrique de l'arbre (9), des moyens de blocage (19, 20, 21, 22) destinés à la plaque de table tournante (10, 11), ainsi que des moyens d'insertion (37, 38, 39, 40) destinés à venir s'insérer dans la première demi-entaille déjà sciée et destinés à maintenir ouverte cette première demientaille lorsqu'on scie la seconde demi-entaille, les moyens (12, 13 et 31, 34) destinés à maintenir la plaque de matière (35, 36) comprenant, outre au moins une ventouse (12, 13) montée sur la face externe d'une plaque de table tournante (10, 11), des moyens de pressage (31, 32, 33, 34) destinés à presser une plaque de matière (35, 36) contre la ventouse (12, 13).

2. Dispositif de sciage selon la revendication précédente, **caractérisé en ce qu'**il comprend deux plaques de table tournante (10 et 11) disposées sur les extrémités libres d'au moins un arbre (9), ce dernier s'étendant en direction transversale par rapport à la direction de sciage et, pour chacune des plaques de table tournante (10 ou 11), des moyens de blocage (19, 20, 21, 22) et d'insertion (37, 38, 39, 40), ainsi que des moyens (12, 13 et 31, 34) destinés à maintenir une plaque de matière (35, 36) en place sur chaque plaque de table tournante (10, 11), ces derniers comprenant au moins une ventouse (12, 13) sur la face externe de la plaque de table tournante (10, 11), ainsi que des moyens de pressage (31, 32, 33, 34) destinés à presser une plaque de matière (35, 36) contre la ventouse (12, 13).

3. Dispositif de sciage selon la revendication précédente, **caractérisé en ce que** les plaques de table tournante (10 et 11) sont montées sur les deux extrémités libres d'un arbre commun (9).

4. Dispositif de sciage selon l'une quelconque des revendications précédentes, **caractérisé en ce qu'**il comprend un moteur (14) et une transmission entre le moteur et l'arbre (9) sur lequel est fixée la plaque de table tournante (10, 11).

5. Dispositif de sciage selon la revendication 1, **caractérisé en ce que** le chariot (1) comprend un châssis rectangulaire plat horizontal comprenant, par plaque (35, 36) à scier, un passage (5, 6) qui permet de faire basculer les plaques (35, 36).

6. Dispositif de sciage selon l'une quelconque des revendications précédentes, **caractérisé en ce que** le chariot (1) est équipé de coulisseaux (61, 62) ou de roues de déplacement (2), qui ont pour but de le déplacer lors du sciage dans un plan parallèle à celui de la lame de scie (49, 50).

7. Dispositif de sciage selon l'une quelconque des revendications précédentes, **caractérisé en ce que** les moyens de pressage destinés à maintenir la matière en plaques (35, 36) comprennent des mécanismes de cylindres sous pression (27, 28, 29, 30) et des disques de pressage (31, 32, 33, 34) montés sur l'extrémité libre (23, 24, 25, 26) de la tige de piston du mécanisme de cylindre sous pression (27, 28, 29, 30).

8. Dispositif de sciage selon l'une quelconque des revendications précédentes, **caractérisé en ce qu'**un des moyens de pressage susmentionnés (31, 32, 33, 34) est prévu, à chaque extrémité de la plaque de matière de ce type (35, 36), à une hauteur légèrement inférieure à la moitié de la hauteur de la plaque.

9. Dispositif de sciage selon l'une quelconque des revendications 7 et 8, **caractérisé en ce que** les moyens de blocage susmentionnés (19, 20, 21, 22) comprennent des évidements (5, 6) ou des rainures (15, 16 et 17, 18) pratiqués dans les côtés verticaux de la plaque de table tournante (10, 11) susmentionnée, ainsi que des broches (19, 20, 21, 22) montées sur l'extrémité libre (23, 24, 25, 26) d'un cylindre sous pression (27, 28, 29, 30) coopérant avec les évidements (5, 6) ou les rainures (15, 16 et 17, 18).

10. Dispositif de sciage selon la revendication précédente, **caractérisé en ce que** les rainures susmentionnées (15, 16 et 17, 18) sont pratiquées verticalement dans les bords verticaux correspondants de la plaque de table tournante (10, 11), la section horizontale des rainures (15, 16, 17, 18) étant de forme triangulaire dans le but de correspondre à l'extrémité triangulaire d'une broche susmentionnée (19, 20, 21, 22).

11. Dispositif de sciage selon l'une quelconque des revendications précédentes, **caractérisé en ce que** les moyens d'insertion susmentionnés (37, 38, 39, 40) comprennent des éléments d'insertion dont l'épaisseur est égale ou légèrement inférieure à la largeur du chemin, les éléments d'insertion (37, 38, 39, 40) étant articulés par rapport au chariot (1) et étant adéquatement mobiles dans ou à l'extérieur du chemin, au moyen d'un mécanisme de cylindre sous pression (45, 46, 47, 48).

12. Dispositif de sciage selon l'une quelconque des revendications précédentes, **caractérisé en ce que** chacune des lames de scie (49, 50) destinées à scier la matière en plaques (35, 36) sur la moitié de sa hauteur, est équipée, de chaque côté, d'au moins un injecteur d'eau (51), garantissant le fait que l'on maintient une distance adéquate entre la scie et la surface adjacente du chemin, tout cela de manière telle que le chemin que le chemin est maintenu ouvert en continu lorsqu'on procède au sciage.

**Patentansprüche**

1. Die vorliegende Erfindung bezieht sich auf eine Sägevorrichtung für Plattenmaterial, bestehend aus einem Träger (1) für wenigstens eine Platte aus Plattenmaterial (35, 36), auf dem Träger (1) montierten Mitteln (12, 13) und 31, 32, 33, 34) um wenigstens eine zu sägende Platte aus Plattenmaterial (35, 36) festzuhalten, wobei besagte Mittel wenigstens aus einem Saugnapf (12, 13) und wenigstens aus einer Kreissäge (49, 50) bestehen um die Platte (35, 36) etwa über ihre halbe Höhe und über ihre Gesamtlänge einzusägen, wobei der Träger (1) und die Säge (49, 50) gegenseitig in die Sägerichtung beweglich sind, das heisst parallel zur Ebene der Kreissägeblätter (49, 50), dadurch gekennzeichnet, dass sie aus wenigstens einer, auf dem Träger (1) montierten Unterstützung (8), einer in besagter Unterstützung gelagerten und sich quer zur besagten Sägerichtung erstreckenden Welle (9), einer, an wenigstens einem der freien Enden besagter Welle (9) um die geometrische Achse besagter Welle (9) drehenden Drehtischplatte (10, 11), Verriegelungsmitteln (19, 20, 21, 22) für besagte Drehtischplatte (10, 11) und Einsteckmitteln (37, 38, 39, 40) zum Einstecken in die erste, schon gesägte Halbschnitt und zum Offenhalten des ersten Sägeschnitts während der zweite Halbschnitt gesägt wird, besteht, wobei die Mittel (12, 13 und 31, 34), die das Plattenmaterial (35, 36) halten, ausser wenigstens einem Saugnapf (12, 13), der an der Aussenseite der Drehtischplatte (10, 11) montiert ist, noch Andruckmittel (31, 32, 33, 34) um das Plattenmaterial (35, 36) an den Saugnapf (12, 13) zu drücken, besitzen.

2. Sägevorrichtung nach vorhergehendem Anspruch, dadurch gekennzeichnet, dass sie an den freien Enden wenigstens einer Welle (9) zwei Drehtischplatten (10 und 11) besitzt, wobei diese Welle sich quer zur Sägerichtung erstreckt und für jede einzelne Drehtischplatte (10 oder 11) Verriegelungsmittel (19, 20, 21, 22) und Einsteckmittel (37, 38, 39, 40), Mittel (12, 13 und 31, 34) zum Festhalten einer Materialplatte (35, 36) an ihrer Platz auf jeder Drehtischplatte (10, 11), wobei besagte Haltemittel wenigstens aus einem Saugnapf (12, 13) an der Aussenseite der Drehtischplatte (10, 11) und Andruckmitteln (31, 32, 33, 34) um eine Materialplatte (35, 36) an den Saugnapf (12, 13) zu drücken bestehen.

3. Sägevorrichtung nach dem vorhergehenden Anspruch, dadurch gekennzeichnet, dass besagte Drehtischplatten 10 und 11 an beiden freien Enden einer gemeinschaftlichen Welle (9) montiert sind.

4. Sägevorrichtung nach gleich welchem der vorhergehenden Ansprüche, dadurch gekennzeichnet, dass sie einen Motor (14) und eine Kraftübertragung zwischen besagtem Motor und der Welle (9), auf der die Drehtischplatte (10, 11) befestigt ist, besitzt.

5. Sägevorrichtung nach Anspruch 1, dadurch gekennzeichnet, dass besagter Träger (1) ein waagerechtes, flaches Gestell besitzt, das pro zu sägende Platte (35, 36) einen Durchgang (5, 6) besitzt, der es ermöglicht die Platten (35, 36) zu kippen.

6. Sägevorrichtung nach gleich welchem der vorhergehenden Ansprüche, dadurch gekennzeichnet, dass besagter Träger (1) mit Gleitschienen (61-62) oder Laufrädern (2) ausgestattet ist um sich während des Sägevorganges in einer parallel zum Sägeblatt (49-50) verlaufenden Ebene zu bewegen.

7. Sägevorrichtung nach gleich welchem der vorhergehenden Ansprüche, dadurch gekennzeichnet, dass die Andruckmittel um das Plattenmaterial (35-36) festzuhalten Druckzylindervorrichtungen (27, 28, 29, 30) und am freien Ende (23, 24, 25, 26) der Kolbenstange besagter Druckzylindervorrichtungen (27, 28, 29, 30) befestigten Andruckscheiben (31, 32, 33, 34) besitzen.

8. Sägevorrichtung nach gleich welchem der vorhergehenden Ansprüche, dadurch gekennzeichnet, dass eines der obenerwähnten Andruckmittel (31, 32, 33, 34) an einem der beiden Enden der Platte aus Plattenmaterial (35, 36) in einer Höhe, die etwas niedriger ist als die halbe Höhe besagter Platte vorgesehen ist.

9. Sägevorrichtung nach gleich welchem der vorhergehenden Ansprüche 7 und 8, dadurch gekennzeichnet, dass die obenerwähnten Verriegelungsmittel (19, 20, 21, 22) Aussparungen (5, 6) oder Nuten (15, 16 und 17, 18) in den senkrechten Seiten der obenerwähnten Drehtischplatte (10, 11) und am freien Ende (23, 24, 25, 26) eines Druckzylinders (27, 28, 29, 30) Stifte (19, 20, 21, 22) besitzen, die mit besagten Aussparungen (5, 6) oder Nuten (15, 16 und 17, 18) zusammenarbeiten.

**10.** Sägevorrichtung nach dem vorhergehenden Anspruch, dadurch gekennzeichnet, dass die obenerwähnten Nuten (15, 16, und 17, 18) senkrecht in den diesbezüglichen senkrechten Kanten besagter Drehtischplatte (10-11) anbebracht worden sind, wobei der waagerechte Durchschnitt besagter Nuten (15, 16, 17, 18) eine dreieckige Form aufweist um mit dem dreieckigen Ende eines obenerwähnten Stiftes (19, 20, 21, 22) zusammenzupassen.

**11.** Sägevorrichtung nach gleich welchem der vorhergehenden Ansprüche, dadurch gekennzeichnet, dass die obenerwähnten Einsteckmittel (37, 38, 39, 40) Einsteckstücke besitzen, deren Stärke gleich oder etwas kleiner ist als die Sägeschnittbreite, wobei besagte Einsteckstücke (37, 38, 39, 40) in bezug auf den Träger (1) angelenkt sind und mittels einer Druckzylindervorrichtung (45, 46, 47, 48) in angemessener Weise in den Sägeschnitt hinein oder heraus beweglich sind.

**12.** Sägevorrichtung nach gleich welchem der vorhergehenden Ansprüche, dadurch gekennzeichnet, dass jedes der beiden Sägeblätter (49, 50), um besagtes Plattenmaterial (35-36) über seine halbe Höhe einzusägen, auf beiden Seiten mit wenigstens einer Wassereinspritzdüse (51) ausgestattet ist, damit gewährleistet wird, dass ein angemessener Abstand zwischen der Säge und der benachbarten Sägeschnittoberfläche gehandhabt bleibt, und zwar derart, dass der Sägeschnitt wahrend des Sägevorganges dauernd offen gehalten wird.

EP 0 209 918 B1

Fig.1

Fig.2

Fig.3

9

Fig. 4

Fig. 5

Fig. 6

Fig. 14

10

Fig.7

Fig.8

Fig.9

*Fig. 11*

*Fig. 12*

*Fig. 13*

*Fig. 10*